# EUROPEAN PATENT SPECIFICATION

(11) **EP 3 237 553 B1**
(45) Date of publication and mention of the grant of the patent: **22.10.2025**
(21) Application number: 15873714.8
(22) Date of filing: 22.12.2015
(51) Int. Cl.: B29C 48/02, E01B 3/10, E04H 12/02

(54) **CONSTRUCTION METHOD OF AN ELEMENT WITH PROTECTIVE COATING AND PRODUCT**
HERSTELLUNGSVERFAHREN EINES BAUELEMENTS MIT SCHUTZSCHICHT UND PRODUKT
PROCÉDÉ DE FABRICATION D'UN ÉLÉMENT DE CONSTRUCTION POURVU D'UN REVÊTEMENT PROTECTEUR ET PRODUIT

(30) Priority: 22.12.2014 NO 20141551
(43) Date of publication of application: 01.11.2017
(73) Proprietor: Hallingplast AS, 3570 Ål (NO)
(72) Inventor: TRAGETHON, Steinar, 3580 Geilo (NO)
(74) Representative: Acapo Onsagers AS
(86) International application number: PCT/NO2015/050259
(87) International publication number: WO 2016/105209

(56) References cited:
- EP-A1- 0 312 473
- JP-A- 2001 252 960
- US-A- 5 983 591
- US-A- 5 983 591
- US-A1- 2005 106 406
- US-A1- 2005 106 406
- US-A1- 2008 265 047

## Description

### Field of the invention

This invention relates to construction elements were wood is coated with a protective coating with thermoplastic and WPC.

This Invention also relates to a method for applying the protective coating on the wooden core material.

### Background of the invention and Prior art

To prevent for instance decaying, attacks by fungi or insects of the wood, such as poles, railway sleepers, other products were wood are the main component and strength carrier. Creosote has been commonly used for a long time among others as preservatives to protect the wood.

Creosote may cause health damages, as a result, the creosote has also an uncertain future as preservative. (Impregnering av trestolper og tretraverser, treteknisk, 2011).

EU Commission Directive 2011/71/EU only authorize the use of creosote until 30.04.2018. It is very likely that the use of creosote is forbidden after this date.

CCA preservation has also been among the most commonly used preservation methods in Norway. If considering health and environmental, all the three active components chromium, copper and arsenic are pollutive. («Impregnering av trevirke og bruk av impregneringsmidler», Norsk institutt for skog og landskap).

The abovementioned preservatives mainly protect the wood material against humidity and weather conditions.

None of these preservatives protects against attacks from for instance woodpeckers, transport and snow damages.

Poles for electricity transmission and telecommunication do often have problems with woodpeckers damaging the post. This results in weakening of the wood. This could lead to an increased risk of failure and accidents when the maintenance personnel climbs up the post.

If the post must be replaced by new post, this could be relatively expensive since the installation cost is high.

In order to solve the above mentioned problem related to protect the pole against woodpecker, transport and snow damages and damages caused by weather conditions, there exists a number of publication that describes various possible solution. Some of them are referred to below.

US5983591 relates to a solid wooden pole comprising a bore extending longitudinally through the pole for extending an electrical cable.

US2005/106406 relates to composite coated wood products. The layers may comprise polymer and fillers, such as organic and inorganic fillers.

JP2001252960 discloses a molded article of a thermoplastic composite material containing at least a thermoplastic resin and a plant-based filler, and a method for producing the same.Publication WO2006/102705 describes the coating of lengths of woods with a plastic material. It is described that the plastic material could be various types of plastic material and are applied to the wood in a crosshead extruder. There is only disclosed one plastic layer that is applied to the core. It is thus not described that the plastic material has wood fibres present in the mixture.

Publication SE 6909432 describes a structure of composite comprising a wooden core, plastic material and a reinforcement. It is disclosed that the reinforcement could be organic or inorganic. This reinforcement material is winded around the core. This reinforcement could therefore not be a mixture of wooden fibres and plastic that is applied in an extruding process. This reinforcement has therefore no function as a protective coating, which prevents damages caused by for instance water.

The publication NO441537 disclose a pole suitable for power line. This pole is made of laminated wood and is impregnated both from the inside and from the outside. At the inside there could be injected a porous material or creosote. The outside of the pole could be coated with a protective coating plastic with glass fiber for reinforcement.

There is however not disclosed a layer with a mixture of plastic and wood. The publication does not discloses the coating process of the plastic layer on the outside of the laminated wood either.

It is thus described in the invention that the coating is a mixture of thermoplastic and wooden fibres. This will provide a more environmental coating than in any of the abovementioned publications. The layer will also cover unevenness like cracks in the wooden core and could also reduce the necessary pretreatment of the core ie the surface of the core could have some unevenness that is covered by the layer with the mixture of thermoplastic and protective coating.

Accordingly, it is an object of the present invention to provide a method and a construction element which can address some of the problems discussed above.

### Summary of the invention

The present invention relates to both a method for manufacturing a pole with a protective coating and a pole manufactured according to said method.

The wooden core could be a massive log, a tree trunk or laminated wood. The continuous protective coating comprises one or more layers with a mixture of a thermoplastic and wooden fibre, the thermoplastic could for instance be polyethylene or polypropylene. The amount of wooden fibre in the mixture can for instance be between 10-70%. Preferred percentage should be as high as possible without effecting the characteristic of the end product.

The protective coating is adapted to be applied to different wooden materials, any wood material can be used if it is possible to dry, and that achieve the desired strength, such as spruce or pine. The wooden material could be impregnated or nonimpregnated.

The core to be coated could be of different dimensions, both in the circumference of the core but also the length of the core can vary. There could also be irregularities or unevenness in the surface of the core.

Both spruce and pine are strong and have dimensions that are suitable to be used as pole production or construction element production.

The protection coating when applied to the core has a smooth surface that protects the wood or tree against decay, woodpeckers, insects, transporting damages, fire, urine from animals, for instance from dogs, damages caused by clearing the road of snow or other external strains. The end portions of the core are also sealed. This could for instance be done by caps of the same thermoplastic material that is applied to the outermost longitudinal surface of the core.

The protective coating provides also extra strength to the wooden core which results in a safe working environment when the construction element or pole is installed or when there are maintenance work. This also reduces the risk of breaking the construction or pole. In addition, the continuous protective coating is not any danger to the environment and the health. The product or core with the continuous protective coating could for instance be used for transmission of electrical energy or telecommunication, as well as building of large structures, like bridges, wharfs/pier and railway sleepers.

The invention is distinctive in that the protective coating comprises one or more layer of thermal plastic mixed with wooden fibre. A protective layer surrounding the core is thereby achieved. The layer is both waterproof and gives resistance against mechanical impact.

The advantage by mixing the thermoplastic with the wooden fibre is that the consumption of plastic is highly reduced and wooden fibre that otherwise are gone to waste could be utilized.

This has also major environmental benefits since it reduces the amount of thermoplastic that is coated on the core.

The protective coating will cover any uneven surface of the wooden core, such as twigs and cracks, so that there is no weak parts in the protective coating. If the protective coating is not continuous throughout the whole surface there are a risk that water etc may enter the rift or opening to the surface of the core and this may gradually cause severe damage.

The minimum thickness of the layer or layers are adjusted in relation to the uneven parts on the core and also to the diameter of the core, and the end use of the invention. When the core has a low diameter, the strength of the core is reduced. To compensate for this there could be applied a thicker layer of the mixture of thermoplastic and wooden fibre to increase the strength of the core. This layer could therefor also be used as a reinforcement layer with protective qualities.

If the composition of the protective layer is elastic, it is more robust and is able to withstand mechanical impacts. The woodpecker will also have difficulties to damage the at least one protective layer by pecking.

By adding colour pigments in the protective coating the protective coating may obtain a preferred color, such as greens, tan, grays or browns. By using an earth tone colour, this provides a pole that blends in with the environment.

Preferable embodiments of the construction element are defined in the dependent claims, to which reference are made.

The at least two protective layer may be applied directly to the core by a cross head and an extruder. This provides an easy and automatic production for applying the protective layers.

In addition there could be drilled a hole through the center of the core. This results in a shorter drying process such that necessary top limit of contained water is reached in a shorter period of time. The hole is also suitable for cables arranged through the hole inside of the pole etc.

Some of the important objectives by applying protective coating to the core is to increase the strength of the construction element or pole and also maintain the dryness of the wooden material through the complete lifecycle so that the strength of the construction element remains constant throughout the complete lifecycle.

By adding wooden fibre in the thermoplastic in one of the protective coating layers the amount of thermoplastic can be considerably reduced which results in a more environmental end construction element or pole than in previous solutions without reducing the lifecycle of the product or pole.

### Brief Description of the Drawings

The attached drawings show by way of example, preferred embodiments of the invention, in which:
Figure 1a shows a cross section of a wooden core with a continuous protective coating with two layers of protective coating.
Figure 1b shows a cross section of a wooden core with a continuous protective coating with three layer of protective coating.
Figure 2 shows a cross section along a longitudinal axis of the wooden core with a continuous protective coating. The protective coating having two layers.
Figure 3-Figure 6 shows the steps of manufacturing a wooden core with continuous protective coating.

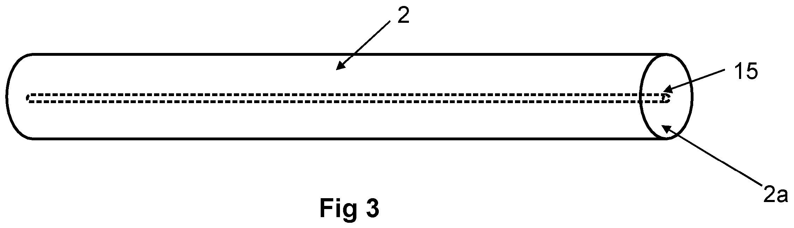

Figure 3 shows the pole with a drilled centerhole before application of the protective coating.

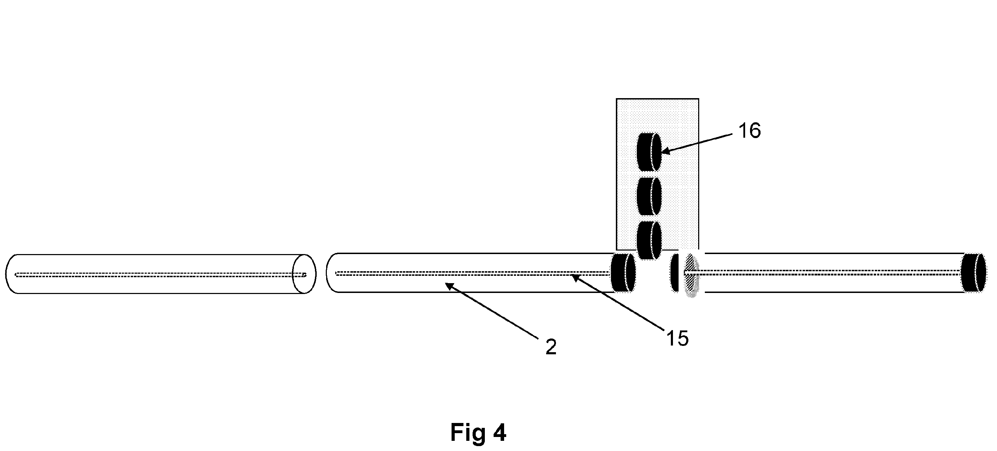

Figure 4 shows the first step in the application process where end coatings are applied to the pole.

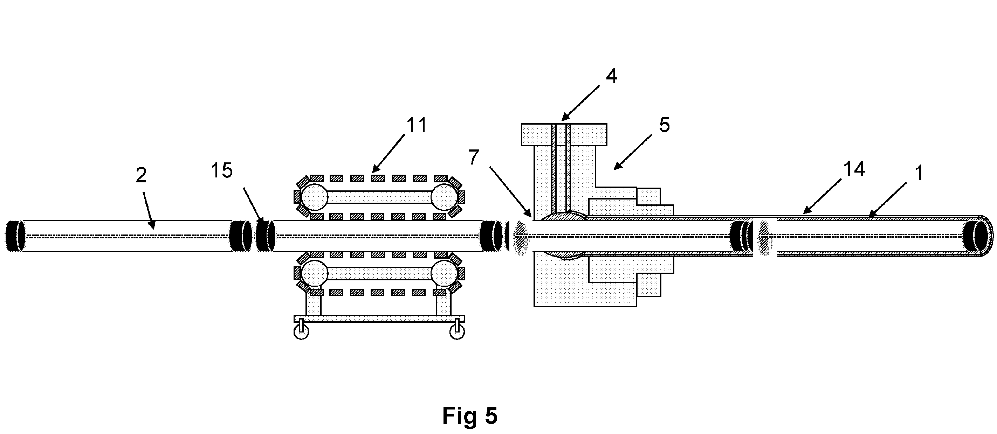

Figure 5 shows the pole being pulled to the next step where at least one continuous layer of protective coating is applied to the outer surface of the pole by an extruder.

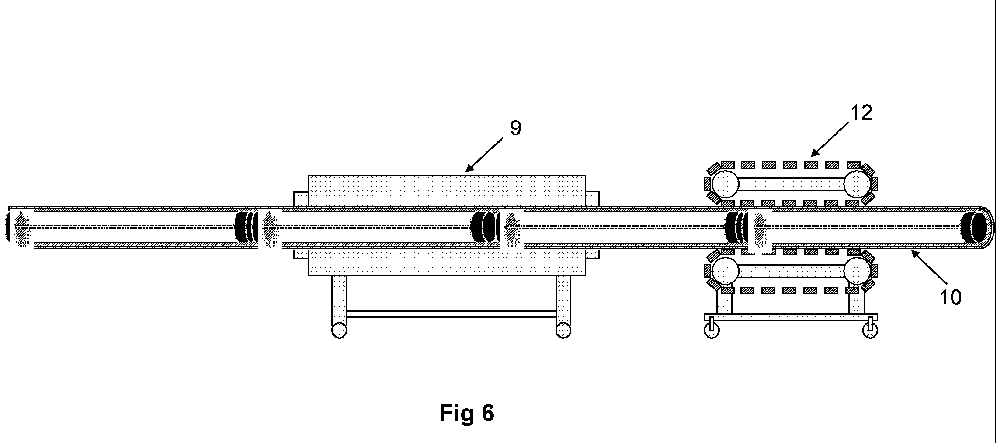

Figure 6 shows the pole being pulled through a cooling chamber.

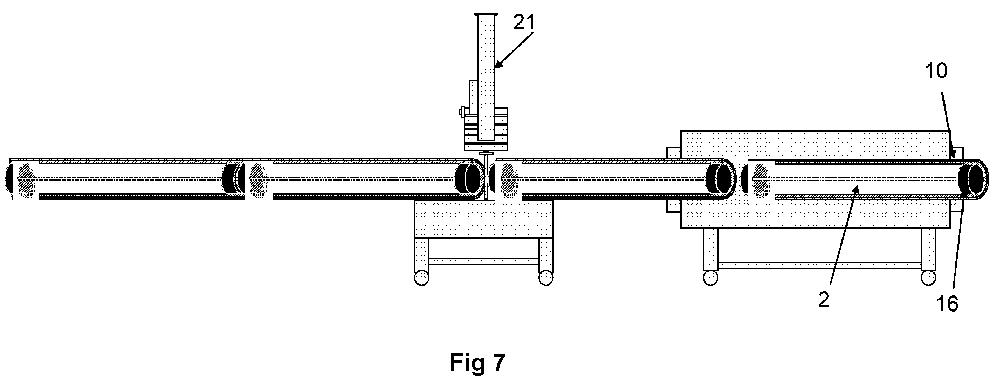

Figure 7 shows a cutting unit separating the poles.

### Description of the invention

In the application the wording core is defined as dried virgin wood, such as a pole a tree trunk, massive log, laminated wood, railway sleepers or other wood products that is impregnated today.

The core comprises a side surface and two end portions. The side surface 2b is defined as the surface around the longitudinal length of the core 2. This surface could be circumferential, quadrat of rectangular depending on the shape of the core.

An end portion2a is defined as the end piece on the top and bottom of the core 2 when the core 2 is arranged in an upright position and where the longitudinal length of the core 2 is arranged substantially vertically. This end portion having a circular shape in the figures but the shape could also be square, rectangular or of other geometry depending on the shape of the core.

A protective coating is defined as a material that is applied to the core in a coating process for instance in an extruding process.

The protective coating comprises at least two layers of protective coating of which a first layer of protective coating 1 contains a mixture of a thermoplastic such as polyetylen or polypropylen mixed with wooden fibre. Wooden fibre could be a pulverization of wood into small pieces suitable for mixing with the thermoplastic.

There could be more than two layers of protective coating applied to the core. The different layers could also contain different amount of the components in the mixture. For instance the first, inner layer can be a mixture of wooden fibre and polyetylen, whereas the outer layer could for instance contain only polyetylen.

A construction element is defined as the finished product of the length of wood coated with the protective coating. The construction element could be used for instance as a telegraph post or railway sleepers, poles or other use were the wood is the main component and strength carrier.

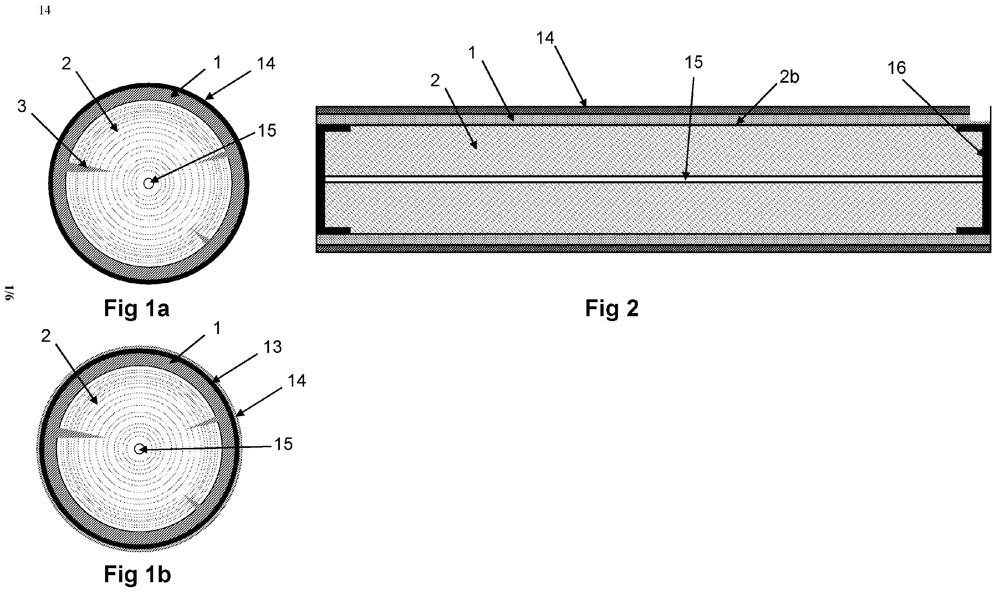

Figure 1a shows a cross sectional view of a pole comprising a core 2 with two layer of protective coating 1, 13, 14.

The figure shows a first protective layer 1 and a second protective layer 14. The first protective layer 1 is applied directly to the core 2 and the second protective layer 14 is applied onto the surface of the first protective layer 1. The pole 10 could optionally have more than two layer of protective coating 1, 14.

Preferably, there is applied between two and three layers of protective coating to the core 2 but a larger number of layers are also possible embodiments of the invention. Figure 1b shows three layer of protective coating 1, 13, 14 applied to the core 2.

The protective coating 1, 13, 14 is applied around a surface 2b of the core 2 so that the protective coating 1, 13, 14 creates a continuous layer throughout the whole surface of the core 2.

Preferably the layer of protective coating 1, 13,14 are applied around the longitudinal surface 2a of the core 2 and end caps 16 is applied to the surface of the end portions 2b of the core 2.

The purpose is to seal the core by a hermetically closed protective coating to prevent water etc from damaging the core 2.

The figure 1a also shows cracks or unevenness 3 in the surface of the core 2. These cracks 3 etc are covered by the layer of protective coating with the mixture of thermoplastic and wooden fibre 1 as shown in the Figure 1a.

The figure also shows a center hole 15 in the core 2. This hole 15 is drilled and is extending through the center of the core 2 in the longitudinal direction of the core 2 between the end portions 2a.

A first layer of the protective coating 1 is a mixture of thermoplastic, such as polyetylen or polypropylene, mixed with wooden fibre as describe earlier. The mixture could for instance be between 10-70% wooden fibre in the mixture.

The different layers could have different mixtures of thermoplastic and wooden fibres. The preferred contain is as high as possible without effecting the characteristic of the end product, such as the strength. At least one of the inner layers of the protective coating contains a mixture of wooden fibre and thermoplastics.

The outermost layer is a layer comprising thermoplastic, such as polyetylen of polyproylene because this gives a hermetical protective coating compared to the mixture of wood fibre and thermoplastic since this is slightly more porous.

In addition to the components, there could also be a color pigment present in the protective coating 1, 13, 14 and also a fire protective agent.

Both components are optional in the layer of protective coating 1, 13, 14 and can be present in any of the layers surrounding the core 2. The fire protection agent must be in the outermost layer of the protective coating 14 to prevent the pole or construction element from fire.

The color pigments will provide the pole with a natural color and the fire protection agent will provide a protection in case of fire close to the place where the pole 10 is arranged when it is in use.

The color that is used should not easily obtain the heat from the environment such as sunlight. Earth colors are also preferable as the blend with nature.

An example of a suitable coating of the core 2 is described below.

The outermost, second layer 3 could for instance comprise a thermoplastic and a fire protective layer in addition to a color pigment.

A color pigment could also be added to the first layer with the mixture 1 in any other layers.

The first, inner layer 1 could for instance comprise a layer of a wood plastic.

Preferably the mixture of thermoplastic and wood fiber in the first layer comprising between 10-70% wooden fibre, preferably as high as possible to remain the desired strength and protective characteristic, this could for instance be between 60-70% wooden fibre in the mixture.

The core 2 could also have a hole 15 through the center of the longitudinal direction.

The method for applying the protective coating 1, 13, 14 to the core 2 is further described in figure 3-6.

This figures shows a schematic view of the different steps from a trunk or core that is cut in suitable lengths to the pole coated with a suitable number of protective coated layers 1, 13, 14.

Figure 3 shows the core in a preparation phase with the hole 15 that is drilled throughout the center of the core 2.

This is performed so that the necessary period of time for drying of the core 2 is reduced. The consequence is an increases efficiency of producing the pole.

It is necessary to reduce the amount of water in the core to less than 20% so that all decomposers are removed from the core before the protective layers are coated onto the core 2.

If the core 2 is not dried to a water content is less than 20%, the pole 10 could be destroyed from within the core 2.

The core could be dried in a number of ways, such as heat treatment of the core, vacuum or natural drying.

The drying processes described above is also suitable with both with or without a hole through the center, but a core 2 with the center hole 15 will dry to a suitable water content more quickly than without the hole 15. The water content in the core 2 should be max 20%.

In addition the pre preparation phase includes a debarking of the core such that the surface of the core 2 is clean. This phase could also include a correction of the dimension of the core 2 such that the annual rings are concentric with the center of the core 2.

Figure 4 shows a first coating step. In this step end caps 16 are applied to the end portions 2a of the core 2. The figure 3 shows end caps applied to both the end portions of the core 2. This is the most preferable embodiment since this will provide a protective cover on both end portion of the core.

The end caps 16 or sealing could in one embodiment be made of the same thermoplastic as the outermost layer 14 of the protective coating applied to the longitudinal surface of the core 2b.

The end caps 16 could also in another embodiment have different layer of wood and thermoplastic and a outermost layer of thermoplastic such as the coating of the longitudinal surface 2a of the core 2.

The cap 16 is preferably applied by heat shrinking of the cap 16 onto the core 2. Other methods could be that each of the end cap 16 is welded in the process to the protective coating 1, 13, 14.

In the second step of the process, the prepared core 2 with protective cap 16 or caps 16 being guided to a extruder 5, for instance a cross-head extruder 5 with an core inlet 7 for the core 2 and a coating inlet 4 for the protective coating 1, 13, 14. The protective coating 1, 13, 14 is supplied from the top or the inlet 4 of the extruder 5 and applied around the surface of the core 2. All the layers 1, 13, 14 are simultaneously applied to the core in the same step.

Each of the protective layers are applied continuously to the surface so that an airtight cover is created around the core 2.

Each of the individual layers of the protective coating 1, 13, 14 could comprise, as described earlier a thermoplastic or a mixture of thermoplastics and wooden fibre and in addition a fire protection and a color pigment.

The outermost layer 14 of the protective coating 1, 13, 14 will be a layer with thermoplastic and possible fire protective agent and color pigment in addition. There are no wooden fibre in this layer. The layer could also be made of only thermoplastic.

When the layers of protective coating 1, 13, 14 is applied to the core 2 the thickness of the pole 10 is increasing. The thickness of all the layers is preferably from 2-20 mm in total. All the layers of protective coating 1, 13, 14 creates a continuous casing around the core 2. The thickness of each of the layers depends on the end use of the invention. The outermost thermoplastic layer is preferably as thin as possible to maintain the protective cover.

The outermost layer could for instance have a thickness between 1-6 mm, more preferably the thickness could be between 1-3 mm.

A thicker layer of thermoplastic are more fire protective than a thinner layer of thermoplastic. When there is need for fire protection, a thicker layer of thermoplastic should be applied to the core.

The components of the protective coating 1 could be mixed before it is fed into the extruder 6 or it could be mixed in the extruder 6 before applied to the core 2. The protective coating 1 will fill any possible cracks 3 (fig 1) and unevenness in the core 2 and at the same time keep the desired minimum thickness of the protective coating 1, 13, 14.

By using the cross-head extruder 6, the protective coating 1, 13, 14 may be applied in one or several layers with different thickness and materials at the same time.

The different layers are welded together in the same process. The different layers are applied to the core 2 in partly fluid condition and attached to each other in the solidification of the layers.

Figure 6 shows a third step where the pole coated with the protective coating is applied to a cooling chamber 9 where the pole is cooled. The protective coating is applied in a continuously in the extruder 6 such that the different poles 10 are joined together in the third cooling step.

Figure 7 shows the fourth and last step where poles are separated into individual poles 10 by a cutting unit 21. The cutting is performed between the end cap 16 of two adjacent poles 20 as shown in the figure.

In another embodiment of the invention the end caps 16 could be applied to the core 1 after the coating of the protective coating 1, 13, 14.

The extruder 6 could also apply the layers of protective coating to the individual poles separately.

The poles have now a protective coating that completely surrounds the core 2 throughout the whole outer surface 2a, 2b.

We have discussed the present invention in terms of the preferred embodiments with reference to the accompanying drawings. However, the present invention is by no means limited to the embodiments shown in Figure 1-Figure 2 and discussed above.

## Claims

1. Method for manufacturing a pole with a protective coating, said pole (10) comprising a core (2), cut in suitable length and a protective coating (1, 13, 14) applied to the outer surface of the core (2), **characterized in that** the method comprising the following steps:
a) debarking and drying of the core (2) to a water content in the core below 20%;
b) applying an end cap (5) onto the end portions of the core; and then
c) applying at least two layers of protective coating (1, 13, 14) onto the outer surface of the core by an extruder (6), the at least one of the at least two layers is a layer comprising a mixture of thermoplastic and wood fiber, said two layers of protective coating (1, 13, 14) are continuously applied to a plurality of cores (2);
d) cooling of the protective coating after the at least two layers of protective coating (1, 13, 14) are applied to the core (2); and after step d)
e) with a cutting unit (21), separating the poles into individual poles (10) by cutting between the end caps (16) of two adjacent poles.

2. Method for manufacturing a pole (10) with a protective coating according to claim 1, wherein the method further comprising the following step:
- drilling a hole (15) through the center of the core (2) as part of the drying process in step a).

3. Method for manufacturing a pole with a protective coating according to claim 1, wherein the end caps (16) are applied to the core (2) by heat shrinking of the caps (16) onto the core (2).

4. A pole manufactured according to any one of the preceding claims, comprising a core (2) such as an all-wood core having a protective coating (1, 13, 14) continuously applied to the outer surface (2a) of the core (2), **characterized in that** said protective coating (1, 13, 14) comprising at least one layer of a mixture of thermoplastic and wooden fibre (1).

5. The pole according to claim 4, wherein the protective coating (1, 13, 14) further comprising a layer of thermoplastic (14), said thermoplastic layer is the outermost layer of the protective coating (1, 13, 14).

6. The pole according to claim 4 or 5, wherein the pole further comprising end caps (16) arranged on each of the end portions (2b) of said pole, said end portions and said protective coating (1, 13, 14), said caps (16) and protective coating (1, 13, 14) are adapted to seal the core (2).

7. The pole according to any one of claim 4-5, wherein said at least one layer of the mixture (1, 13) comprising at between 10-70 % wooden fibre.

8. The pole according to any one of the claims 4-7, wherein at least one layer of protective coating (1, 13, 14) comprising color pigments.

9. The pole according to any one of the claims 4-8, wherein the outermost thermoplastic layer (14) comprising a fire protective agent.

10. The pole according to claim 4 or 5, wherein the thermoplastic being polyetylen or polypropylene.

11. The pole according to any one of claims 4-8, wherein the total protective coating (1, 13, 14) has a minimum thickness of between 2-20 mm suitable for covering unevenness on the surface of the core (2).

12. The pole according to any one of claims 4-9, wherein the core (2) is a pine core or a spruce core.

13. The pole according to any one of claims 4-10, wherein the core having a hole extending longitudinally through the center of the core (2)

## Patentansprüche

1. Verfahren zum Herstellen eines Pfahls mit einer Schutzbeschichtung, wobei der Pfahl (10) einen in geeigneter Länge geschnittenen Kern (2) und eine auf die Außenfläche des Kerns (2) aufgebrachte Schutzbeschichtung (1, 13, 14) umfasst, **dadurch gekennzeichnet, dass** das Verfahren die folgenden Schritte umfasst:
a) Entrinden und Trocknen des Kerns (2) auf einen Wassergehalt in dem Kern unterhalb von 20 %;
b) Aufbringen einer Endkappe (5) auf die Endabschnitte des Kerns; und dann
c) Aufbringen von mindestens zwei Schichten einer Schutzbeschichtung (1, 13, 14) auf die Außenfläche des Kerns durch einen Extruder (6), wobei die mindestens eine der mindestens zwei Schichten eine Schicht ist, die eine Mischung aus Thermoplast und Holzfaser umfasst, wobei die zwei Schichten der Schutzbeschichtung (1, 13, 14) kontinuierlich auf eine Vielzahl von Kernen (2) aufgebracht werden;
d) Kühlen der Schutzbeschichtung nach erfolgtem Aufbringen der mindestens zwei Schichten der Schutzbeschichtung (1, 13, 14) auf den Kern (2); und nach Schritt d)
e) mit einer Schneideinheit (21), Trennen der Pfähle in individuelle Pfähle (10) durch Schneiden zwischen den Endkappen (16) zweier benachbarter Pfähle.

2. Verfahren zum Herstellen eines Pfahls (10) mit einer Schutzbeschichtung nach Anspruch 1, wobei das Verfahren ferner den folgenden Schritt umfasst:
- Bohren eines Lochs (15) durch die Mitte des Kerns (2) als Teil des Trocknungsvorgangs in Schritt a).

3. Verfahren zum Herstellen eines Pfahls mit einer Schutzbeschichtung nach Anspruch 1, wobei die Endkappen (16), durch Wärmeschrumpfen der Kappen (16) auf den Kern (2), auf den Kern (2) aufgebracht werden.

4. Pfahl, hergestellt nach einem der vorhergehenden Ansprüche, umfassend einen Kern (2), wie z. B. einen Ganzholzkern, der eine Schutzbeschichtung (1, 13, 14) aufweist, die kontinuierlich auf die Außenfläche (2a) des Kerns (2) aufgebracht wird, **dadurch gekennzeichnet, dass** die Schutzbeschichtung (1, 13, 14) mindestens eine Schicht einer Mischung aus Thermoplast und Holzfaser (1) umfasst.

5. Pfahl nach Anspruch 4, wobei die Schutzbeschichtung (1, 13, 14) ferner eine Schicht aus Thermoplast (14) umfasst, wobei die Thermoplastschicht die äußerste Schicht der Schutzbeschichtung (1, 13, 14) ist.

6. Pfahl nach Anspruch 4 oder 5, wobei der Pfahl ferner Endkappen (16) umfasst, die auf jedem der Endabschnitte (2b) des Pfahls angeordnet sind, wobei die Endabschnitte und die Schutzbeschichtung (1, 13, 14), die Kappen (16) und die Schutzbeschichtung (1, 13, 14) dazu ausgelegt sind, den Kern (2) zu versiegeln.

7. Pfahl nach einem von Anspruch 4-5, wobei die mindestens eine Schicht der Mischung (1, 13) zwischen 10-70 % Holzfaser umfasst.

8. Pfahl nach einem der Ansprüche 4-7, wobei mindestens eine Schicht einer Schutzbeschichtung (1, 13, 14) Farbpigmente umfasst.

9. Pfahl nach einem der Ansprüche 4-8, wobei die äußerste thermoplastische Schicht (14) ein Brandschutzmittel umfasst.

10. Pfahl nach Anspruch 4 oder 5, wobei der Thermoplast Polyethylen oder Polypropylen ist.

11. Pfahl nach einem der Ansprüche 4-8, wobei die gesamte Schutzbeschichtung (1, 13, 14) eine Mindestdicke von zwischen 2-20 mm aufweist, die zum Abdecken von Unebenheiten auf der Oberfläche des Kerns (2) geeignet ist.

12. Pfahl nach einem der Ansprüche 4-9, wobei der Kern (2) ein Kieferkern oder ein Fichtenkern ist.

13. Pfahl nach einem der Ansprüche 4-10, wobei der Kern ein Loch aufweist, das sich längs durch die Mitte des Kerns (2) erstreckt.

## Revendications

1. Procédé permettant la fabrication d'un poteau avec un revêtement protecteur, ledit poteau (10) comprenant une partie centrale (2), découpé dans une longueur appropriée et un revêtement protecteur (1, 13, 14) appliqué sur la surface externe de la partie centrale (2), **caractérisé en ce que** le procédé comprend les étapes suivantes :
a) l'écorçage et le séchage de la partie centrale (2) jusqu'à une teneur en eau dans la partie centrale inférieure à 20 % ;
b) l'application d'un capuchon d'extrémité (5) sur les parties d'extrémité de la partie centrale ; et ensuite
c) l'application d'au moins deux couches de revêtement protecteur (1, 13, 14) sur la surface externe de la partie centrale par une extrudeuse (6), l'au moins une des au moins deux couches étant une couche comprenant un mélange de thermoplastique et de fibre de bois, lesdites deux couches de revêtement protecteur (1, 13, 14) étant appliquées en continu sur une pluralité de parties centrales (2) ;
d) refroidissement du revêtement protecteur après l'application des au moins deux couches de revêtement protecteur (1, 13, 14) sur le partie centrale (2) ; et après l'étape d)
e) avec une unité de coupe (21), la séparation des poteaux en poteaux individuels (10) en coupant entre les capuchons d'extrémité (16) de deux poteaux adjacents.

2. Procédé permettant la fabrication d'un poteau (10) avec un revêtement protecteur selon la revendication 1, ledit procédé comprenant en outre l'étape suivante :
- perçage d'un trou (15) à travers le centre de la partie centrale (2) dans le cadre du processus de séchage à l'étape a).

3. Procédé permettant la fabrication d'un poteau avec un revêtement protecteur selon la revendication 1, lesdits capuchons d'extrémité (16) étant appliqués sur la partie centrale (2) par thermorétraction des capuchons (16) sur la partie centrale (2).

4. Poteau fabriqué selon l'une quelconque des revendications précédentes, comprenant une partie centrale (2) telle qu'une partie centrale entièrement en bois possédant un revêtement protecteur (1, 13, 14) appliqué en continu sur la surface externe (2a) de la partie centrale (2), **caractérisé en ce que** ledit revêtement protecteur (1, 13, 14) comprend au moins une couche d'un mélange de thermoplastique et de fibre de bois (1).

5. Poteau selon la revendication 4, ledit revêtement protecteur (1, 13, 14) comprenant en outre une couche de thermoplastique (14), ladite couche de thermoplastique étant la couche la plus externe du revêtement protecteur (1, 13, 14).

6. Poteau selon la revendication 4 ou 5, ledit poteau comprenant en outre des capuchons d'extrémité (16) agencés sur chacune des parties d'extrémité (2b) dudit poteau, lesdites parties d'extrémité et ledit revêtement protecteur (1, 13, 14), lesdits capuchons (16) et ledit revêtement protecteur (1, 13, 14) étant adaptés pour sceller ladite partie centrale (2).

7. Poteau selon l'une quelconque des revendications 4 à 5, ladite au moins une couche du mélange (1, 13) comprenant entre 10 et 70 % de fibres de bois.

8. Poteau selon l'une quelconque des revendications 4 à 7, au moins une couche de revêtement protecteur (1, 13, 14) comprenant des pigments de couleur.

9. Poteau selon l'une quelconque des revendications 4 à 8, ladite couche de thermoplastique la plus externe (14) comprenant un agent de protection contre l'incendie.

10. Poteau selon la revendication 4 ou 5, ledit thermoplastique étant du polyéthylène ou du polypropylène.

11. Poteau selon l'une quelconque des revendications 4 à 8, ledit revêtement protecteur total (1, 13, 14) possédant une épaisseur minimale située entre 2 et 20 mm appropriée pour couvrir les irrégularités sur la surface de la partie centrale (2).

12. Poteau selon l'une quelconque des revendications 4 à 9, ladite partie centrale (2) étant une partie centrale en pin ou une partie centrale en épicéa.

13. Poteau selon l'une quelconque des revendications 4 à 10, ladite partie centrale possédant un trou s'étendant longitudinalement à travers le centre de la partie centrale (2).
